# EUROPEAN PATENT APPLICATION

(11) **EP 4 738 669 A1**
(43) Date of publication of application: **06.05.2026**
(21) Application number: 25162551.3
(22) Date of filing: 10.03.2025
(51) Int. Cl.: H02K 33/16

(54) **LINEAR ACTUATING DEVICE AND HAIR CUTTING DEVICE**

(30) Priority: 31.10.2024 CN 202411540009
(71) Applicant: Raymond (Panyu Nansha) Electrical Appliances Development Co., Ltd., Guangzhou, Guangdong 511458 (CN)
(72) Inventor: Wong, Ying Man John, Guangzhou, Guangdong 511458 (CN); Wong, Yin Wai, Guangzhou, Guangdong 511458 (CN)
(74) Representative: Herrero & Asociados, S.L.

(57) **Abstract**

The invention belongs to the technical field of linear motors and specifically discloses a linear actuating device and a hair cutting device. By disposing an installation frame (200), an electromagnet (100) is disposed horizontally in an electromagnet installation part, and a magnet group (300) is disposed in a magnet group installation part, so that the magnet group is positioned opposite to a magnet pole of a corresponding end of the electromagnet disposed horizontally. When alternating current is flowed through the electromagnet, a magnetic induction action between the electromagnet and the magnet group causes the magnet group to reciprocate along a direction perpendicular to a central axis of the electromagnet. By arranging the electromagnet horizontally and placing the magnet group on a side of the electromagnet opposite to the magnet pole of the electromagnet, a horizontal space can be fully utilized, which significantly reduces a height of the linear actuating device, thereby reducing a length of products with the linear actuating device, coordinating a proportion of the products in length and horizontal directions, and enhancing the beauty of the products' appearance.

## Description

### TECHNICAL FIELD

The invention relates to the technical field of linear motors, and more particularly to a linear actuating device and a hair cutting device equipped with the linear actuating device.

### BACKGROUND

A linear actuating device (also referred to as linear actuator) is used to control linear displacement or force. It generates a magnetic field through the principle of electromagnetic induction, and uses this magnetic field to apply force or motion to a load, thereby achieving linear control of the load. In the linear actuating device in the related art, an electromagnet in a stator assembly is arranged in a vertical state, in order to achieve smooth magnetic induction and to drive the load that needs linear motion to move back and forth smoothly, a magnet group in a mover assembly is arranged at a top end of the electromagnet, that is, the mover assembly is located above the stator assembly. At this time, only one magnet pole of the electromagnet faces towards the magnet group in the mover assembly, and the other magnet pole is in a useless state. The magnet group in the mover assembly is located above the magnet pole at the top of the electromagnet, and through a magnetic induction action between the magnet group and the magnet pole at the corresponding end of the electromagnet, the magnet is made to move back and forth, thereby driving the load that needs linear motion (such as a cutting blade assembly in a hair cutting device) to move back and forth. However, the electromagnet itself has a certain height, and when it is arranged vertically, it increases a length of the linear actuating device in a vertical direction, as a result, a product using such the linear actuating device requires more installation space in the vertical direction, increasing the length, and resulting in lower space utilization rate in a horizontal direction. Moreover, due to a longer length in a height direction (which can also be understood as a length direction), a proportion of appearance of the product in the length direction and the horizontal direction is not coordinated, resulting in the appearance of the entire product not being beautiful.

### SUMMARY

The invention aims to solve the aforementioned technical problems in the related art, and provides a linear actuating device which is capable of improving space utilization rate to reduce the volume of the linear actuating device, rationally use the space in a horizontal direction, and improve the beauty of the linear actuating device. Additionally, the invention also provides a hair cutting device equipped with the linear actuating device.

In order to solve the aforementioned technical problems, the invention provides the following technical solutions.

A linear actuating device provided by the invention includes an installation frame, an electromagnet and a magnet group. The installation frame includes an electromagnet installation part and a magnet group installation part disposed on a side of the electromagnet installation part. The electromagnet is horizontally disposed in the electromagnet installation part, and the magnet group is disposed in the magnet group installation part. After the magnet group is disposed in the magnet group installation part, the magnet group is positioned opposite to a magnet pole of an end of the electromagnet disposed in the electromagnet installation part.

The invention provides the linear actuating device. By disposing the installation frame, the electromagnet is horizontally disposed in the electromagnet installation part, and the magnet group is disposed in the magnet group installation part to make the magnet group be positioned opposite to a magnet pole of a corresponding end of the horizontally disposed electromagnet. After alternating current is applied to the electromagnet, the magnet group can be moved back and forth along a direction perpendicular to a central axis of the electromagnet through magnetic induction action between the electromagnet and the magnet group. By arranging the electromagnet horizontally and disposing the magnet group at the side of the electromagnet and opposite to the magnet pole of the electromagnet, the horizontal space can be fully utilized, which greatly reduces a height of the linear actuating device. This reduces a length of a product using the linear actuating device, makes a proportion between the length and a width more coordinated, and enhances the beauty of the appearance of the product.

In an embodiment, a number of the magnet group installation part is two, the two magnet group installation parts are respectively disposed on two sides of the electromagnet installation part. A number of the magnet group is two, the two magnet groups are respectively disposed in the two magnet group installation parts, and each magnet group is positioned opposite to a magnet pole of a corresponding electromagnet disposed in the electromagnet installation part.

In an embodiment, the magnet group installation part is elastically connected to the electromagnet installation part through an elastic connection part; and the elastic connection part is integrated with the electromagnet installation part into one whole, or the elastic connection part is detachably connected to the electromagnet installation part by fasteners.

In an embodiment, connecting walls are respectively disposed on two sides of the electromagnet installation part, first extension parts are respectively disposed on the connecting walls, and second extension parts are respectively disposed on two sides of the magnet group installation part. One of the first extension parts and one of the second extension parts on a same side as the one of the first extension parts extend in a same direction, and the one of the first extension parts and the one of the second extension parts on the same side as the one of the first extension parts are connected through the elastic connection part.

In an embodiment, the elastic connection part includes at least one first elastic support part.

In an embodiment, the elastic connection part further includes a second elastic support part, a number of the first elastic support part is two, the second elastic support part is disposed between the two first elastic support parts, and a thickness of the second elastic support part is greater than a thickness of each of the two first elastic support parts on two sides of the second elastic support part.

In an embodiment, the elastic connecting part includes the two first elastic support parts and the second elastic support part, and the second elastic support part is disposed between the two first elastic support parts;
a portion of the first extension part disposed between each of the two first elastic support parts and the second elastic support part, and a portion of the first extension part disposed between the first elastic support part and the respective connecting wall are circular arc-shaped; and
a portion of the second extension part disposed between each of the two first elastic support parts and the second elastic support part, and a portion of the second extension part disposed between the first elastic support part and the magnet group installation part are circular arc-shaped.

In an embodiment, an actuating arm is connected to the magnet group installation part, an output shaft is disposed on the actuating arm, and the output shaft is disposed above the installation frame.

In an embodiment, the actuating arm defines a locating hole, and a locating protrusion is disposed on the magnet group installation part. When the actuating arm is connected to the magnet group installation part, the locating protrusion is inserted into the locating hole to position the actuating arm; or
the actuating arm is integrally with the magnet group installation part into one whole.

In an embodiment, a number of the actuating arm is two, a number of the magnet group installation part is two, the two magnet group installation parts are respectively disposed on two sides of the electromagnet installation part, the two actuating arms are respectively disposed on the magnet group installation parts on the two sides of the electromagnet installation part, and free ends of the two actuating arms are arranged in a staggered or opposite manner.

A hair cutting device provided by the invention includes a shell and at least one cutting blade assembly. The linear actuating device as described is disposed in the shell, the cutting blade assembly is connected to the magnet group installation part, and the cutting blade assembly is configured to move back and forth with the magnet group under a power provided by the magnet group of the linear actuating device.

The hair cutting device provided by the invention is equipped with the linear actuating device, therefore, a length (or height) of the shell of the hair cutting device can be shortened, the horizontal space inside the shell can be fully utilized, and the beauty of the hair cutting device can be improved. Furthermore, because the hair cutting device is equipped with the linear actuating device, it also benefits from all the technical advantages provided by the linear actuating device, which will not be reiterated here.

### BRIEF DESCRIPTION OF DRAWINGS

Through preferred embodiments of the invention shown in the accompanying drawings, the above and other objects, features, and advantages of the invention will become clearer. In all the accompanying drawings, the same reference numerals indicate the same parts, and the accompanying drawings are not necessarily drawn to scale. The emphasis is on illustrating the main idea of the invention.
FIG. 1 illustrates a perspective view of a linear actuating device according to a first implementation of the invention.
FIG. 2 illustrates an exploded view of the linear actuating device illustrated in FIG. 1.
FIG. 3 illustrates a schematic structural diagram of two electromagnets.
FIG. 4 illustrates a schematic structural diagram of a magnet group.
FIG. 5 illustrates a schematic diagram of a reciprocating linear motion of the magnet group relative to an electromagnet in a first embodiment.
FIG. 6 illustrates a schematic diagram of the reciprocating linear motion of the magnet group relative to the electromagnet in a second embodiment.
FIG. 7 illustrates a top view of the linear actuating device, where an electromagnet fixing plate and an actuating arm are removed.
FIG. 8 illustrates a schematic diagram of movement directions of two magnet groups in the first embodiment.
FIG. 9 illustrates a schematic diagram of the movement directions of the two magnet groups in the second embodiment.
FIG. 10 illustrates a schematic structural diagram of an installation frame.
FIG. 11 illustrates a schematic structural diagram of the actuating arm.
FIG. 12 illustrates a schematic diagram of the linear actuating device according to a second implementation of the invention.
FIGS. 13 and 14 illustrate schematic diagrams of the linear actuating device according to a third implementation of the invention.

### DETAILED DESCRIPTION OF EMBODIMENTS

For the convenience of understanding the invention, a more comprehensive description is provided below with reference to the accompanying drawings.

It should be noted that when a component is considered to be "connected" to another component, the component can be directly connected to and integrated with the another component, or there may be a middle component present at the same time. Terms "installation", "one end", "another end", and similar expressions used herein are for illustrative purposes only.

Unless otherwise defined, all technical and scientific terms used herein have the same meaning as understood by those skilled in the art. Terms used in this specification are for the purpose of describing specific embodiments only and are not intended to limit the invention. The term "and/or" as used herein includes any and all combinations of one or more related listed items.

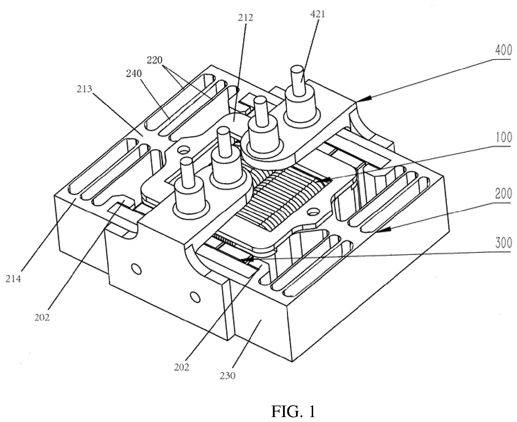

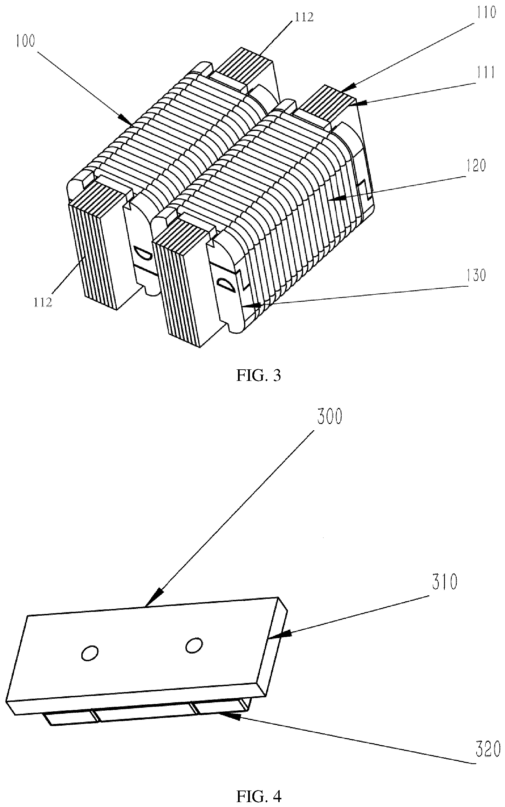

In a first embodiment, a linear actuating device, as shown in FIGS. 1-3 and 12-14, includes at least one electromagnet 100 disposed horizontally, and a number of the electromagnet 100 may be one or more. In the first embodiment, the number of the electromagnet 100 is two, the two electromagnets 100 are configured to produce two pairs of magnetic field combinations, which increases the stability of reciprocating motion of a magnet group 300, enhances magnetic force, and also reduces costs. The electromagnet 100 includes a metal core 110 and an insulated winding box 130 wrapped around the metal core 110, and a coil 120 is wound around the insulated winding box 130. The metal core 110 includes at least five metal sheets 111, and multiple metal sheets 111 are stacked to form the metal core 110. A thickness of each metal sheet 111 is within 0.5 millimeter (mm) (including 0.5 mm), and each metal sheet 111 can be I-shaped. In order to achieve a required thickness of the metal core 110, the multiple metal sheets 111 need to be assembled together to achieve the overall thickness of the metal core 110. For example, if the overall thickness of the metal core 110 is required to be 3 mm, ten metal sheets 111 with the thickness of 0.3 mm are needed. If each metal sheet 111 with the thickness of 0.5 mm is used, six metal sheets 111 are required. Additionally, the thickness of the metal sheet 111 is set to be within 0.5 mm (including 0.5 mm) to ensure that eddy currents are not generated within the metal sheet 111 when magnetized, saving energy consumption and significantly reducing heat generation, without affecting the performance and energy efficiency of the linear actuating device. The insulated winding box 130 is made of a polymer material, and its thickness does not exceed 1 mm (including 1 mm), because the insulated winding box 130 being too thick would affect the magnetic conduction and occupy space.

In the first embodiment, as shown in FIGS. 1, 2 and 4, a magnet pole 112 of at least end of the electromagnet 100 is provided with the magnet group 300. That is, the electromagnet 100 defines two magnet poles 112, the magnet group 300 is disposed only at one of the two magnet poles 112, or the two magnet poles 112 of the electromagnet 100 are respectively provided with the magnet groups 300 at the same time. In the first embodiment, a number of the magnet group 300 is two, and the two magnet groups 300 are respectively disposed at the two magnet poles 112 of the electromagnet and configured to drive at least two components that need to perform linear motion to move back and forth in the same directions or opposite directions. The magnet group 300 includes at least two magnets 320, that is, a number of the magnet 320 is two or more. The magnet group 300 further includes a magnetic conductive metal 310, and the magnets 320 are arranged along a length direction of the magnetic conductive metal 310 on a surface of the magnetic conductive metal 310. Some of the magnets 320 define their sides facing the electromagnet 100 as S pole, and the other magnets 320 define their sides facing the electromagnet 100 as N pole. In a same magnet group 300, some of the magnets 320 define their sides facing the electromagnet 100 as the S pole and the other magnets 320 define their sides facing the electromagnet 100 as the N pole, thus when the electromagnet 100 is energized, a magnetic induction action between the electromagnet 100 and the magnet group 300 prompts the magnet group 300 to move back and forth along a direction perpendicular to a central axis B of the electromagnet 100.

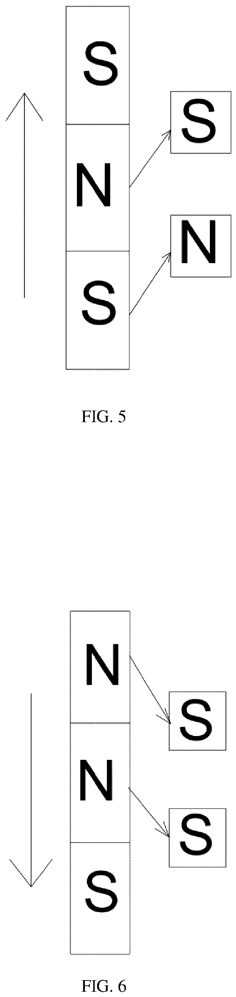

In the first embodiment, when the number of the electromagnet is more than two, all electromagnets 100 are disposed side by side horizontally (also referred to as all electromagnets 100 are juxtaposed with each other horizontally). After all electromagnets 100 are energized, polarities of the magnet poles 112 at the same ends of all electromagnets 100 are opposite. The magnet group 300 includes three or more magnets 320, and polarities of all magnets 320 in the magnet group 300 facing the electromagnet 100 are arranged alternately between the S pole and N pole. For example, when the number of the electromagnet 100 is two, after alternating current is applied, at the same ends of the two electromagnets 100, the polarity of a magnet pole 112 of one of the two electromagnets 100 is the N pole, and the polarity of a magnet pole 112 of the other electromagnet 100 is the S pole. The polarities of the magnet poles 112 at the same ends of the two electromagnets 100 are opposite, which can be achieved by winding the coil 120 in an opposite direction. Consequently, when the two electromagnets 100 are connected in series, the current flowing through the coil 120 is in the opposite direction, thereby making the polarities of the magnet poles 112 at the same ends of the two electromagnets 100 opposite. Alternatively, the two electromagnets 100 can be connected in parallel with a positive pole and a negative pole connected in the opposite direction, thereby causing the current to flow in the opposite direction in the coil 120, thereby making the polarities of the magnet poles 112 at the same ends of the two electromagnets 100 opposite. However, this structure requires separate control of the two electromagnets 100, increasing the complexity of the control circuit and increasing the manufacturing cost of the linear actuating device. At this time, the magnet group 300 includes three magnets 320, and the polarities of the sides of the three magnets 320 facing the electromagnet 100 can be S pole-N pole-S pole or N pole-S pole-N pole. As shown in FIG. 5, it illustrates an action schematic diagram of a reciprocating linear motion of the magnet group 300 relative to the electromagnet 100 in the first embodiment, and the magnet group 300 moves upward in a direction of an arrow. A second embodiment is that when the number of the electromagnet 100 is more than two, all electromagnets 100 are arranged side by side, and after all electromagnets 100 are energized, the polarities of the magnet poles 112 at the same ends of all electromagnets 100 are same. The magnet group 300 includes three or more magnets 320, and the polarities of the sides of all magnets 320 facing the electromagnet 100 are arranged in units of S pole-S pole-N pole, N pole-S pole-S pole, S pole-N pole-N pole, or N pole-N pole-S pole. For example, when the number of the electromagnet 100 is two, after the alternating current is applied, the polarities of the same ends of the two electromagnets 100 are the N pole. At this time, the magnet group 300 includes three magnets 320, and the polarities of the sides of the three magnets 320 facing the electromagnet 100 can be S pole-S pole-N pole, N pole-S pole-S pole, S pole-N pole-N pole, or N pole-N pole-S pole. As shown in FIG. 6, it illustrates an action schematic diagram of the reciprocating linear motion of the magnet group 300 relative to the electromagnet 100 in the second embodiment, and the magnet group 300 moves downward in the direction of the arrow. Through the above structure, the magnet group 300 can be ensured to move linearly back and forth smoothly.

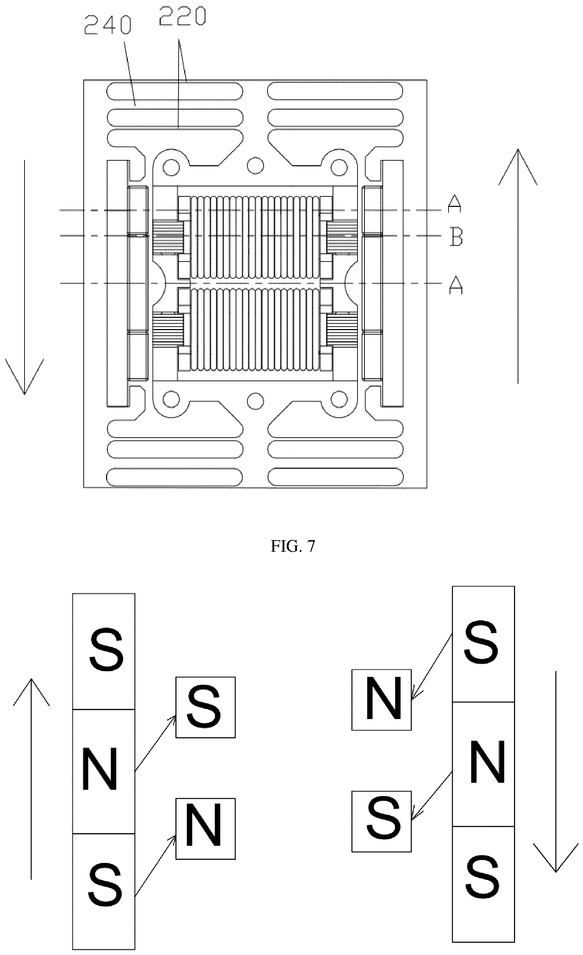

In a preferred embodiment, as shown in FIG. 7, the number of the magnet 320 in the magnet group 300 is one more than the number of the electromagnet 100. A perpendicular line A, which is perpendicular to a surface center of the magnet 320, is arranged in a staggered manner with respect to the central axis B of the electromagnet 100. The central axis B of a single electromagnet 100 is disposed between two perpendicular lines A at centers of two adjacent magnets 320. It is preferred that the central axis B of the single electromagnet 100 coincides with a junction of the two adjacent magnets 320. This arrangement ensures that magnetic flux (at least more than half of the magnetic flux) generated by the single electromagnet 100 is flowed through at least two magnets 320 located on a same side simultaneously. This further ensures the smooth reciprocating linear motion of the magnet group 300.

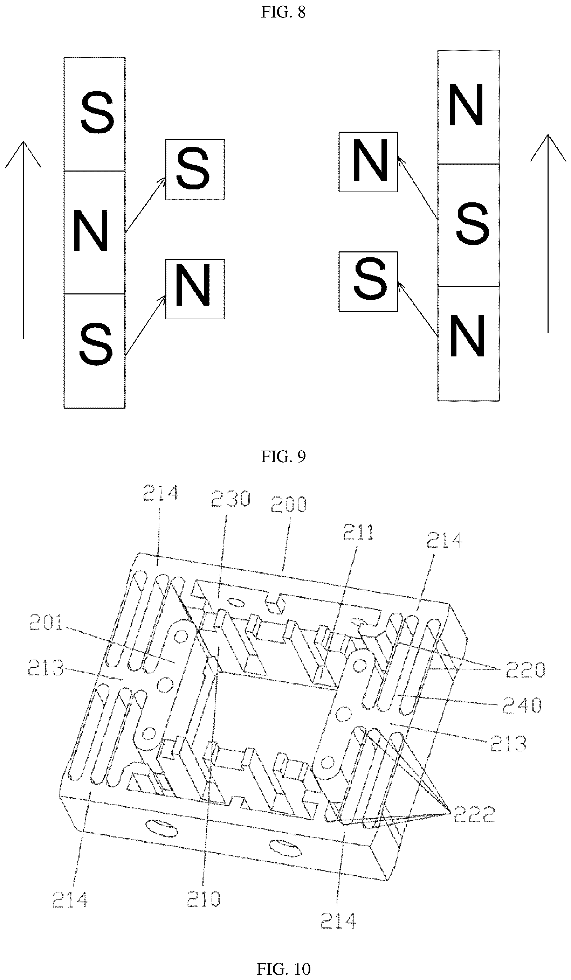

In a preferred embodiment, as shown in FIGS. 1, 2, and 7, the number of the magnet group 300 is two, and the two magnet groups 300 are respectively disposed correspondingly to the two magnet poles 112 of the electromagnet 100. A magnet pole arrangement on the side of the magnets 320 of the magnet group 300 facing the electromagnets 100 is the same as that magnet group 300. For example, each magnet group 300 includes three magnets 320, and the magnet pole arrangement on the side of the magnets 320 of the magnet group 300 facing the electromagnets 100 is S pole-N pole-S pole, and the magnetic pole arrangement on the side of the magnets 320 of another magnet group 300 facing the electromagnets 100 is also S pole-N pole-S pole. As shown in FIG. 8, it illustrates a schematic diagram of movement directions of the two magnet groups 300. At this time, the movement directions of the two magnet groups 300 are opposite. By making the movement directions of the two magnet groups 300 opposite, amplitude can be reduced, vibrations can be lessened, and noise can be lowered. In the second embodiment, the number of the magnet group 300 is two, and the two magnet groups 300 are respectively disposed correspondingly to the two magnet poles 112 of the electromagnet 100. The magnet pole arrangement of the magnets 320 of the magnet group 300 facing the electromagnets 100 is opposite to that of the magnets 320 of the other magnet group 300 facing the electromagnets 100. For example, each magnet groups 300 includes three magnets 320, and the magnet pole arrangement of the magnets 320 of the magnet group 300 facing the electromagnets 100 is S pole-N pole-S pole, and the magnet pole arrangement of the magnets 320 of the other magnet group 300 facing the electromagnets 100 is N pole-S pole-N pole. As shown in FIG. 9, it illustrates a schematic diagram of the movement directions of the two magnet groups 300. At this time, the movement directions of the two magnet groups 300 are same.

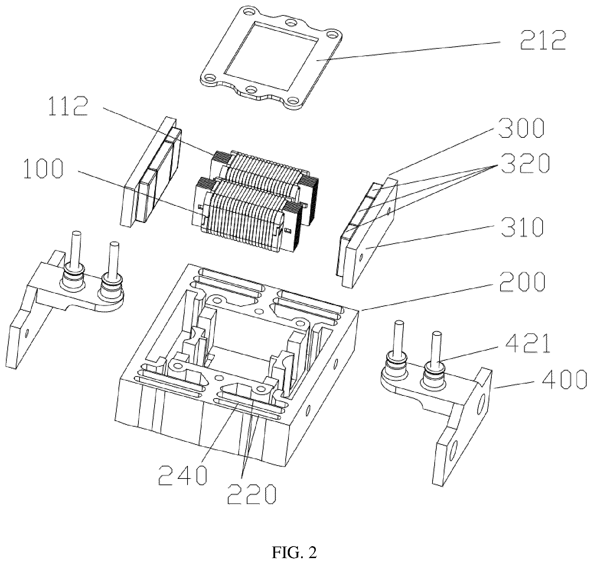

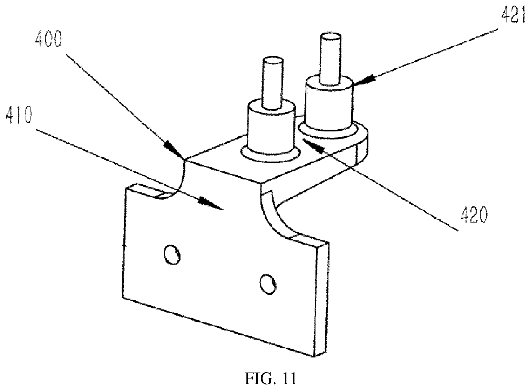

In a preferred embodiment, the linear actuating device includes an installation frame 200, which defines multiple implementations. The invention provides three specific implementations. In a first implementation, as shown in FIGS. 1, 2, 7, and 10, the installation frame 200 includes an electromagnet installation part and a magnet group installation part. The magnet group installation part is disposed on a side of the electromagnet installation part and is positioned opposite to the magnet pole 112 of the electromagnet 100 disposed in the electromagnet installation part. The magnet group installation part is elastically connected to the electromagnet installation part through an elastic connection part. In the first implementation, the elastic connection part is integrated with the electromagnet installation part into one whole. Specifically, the electromagnet installation part is connected to the elastic connection part through a connecting wall 201, and the electromagnet installation part, the magnet group installation part and the elastic connection part are integrated into one whole to simplify production process and reduce assembly errors. A number of the magnet group installation part is determined by the number of the magnet group 300 and can be only one or two. When the number of the magnet group installation part is two, the two magnet group installation parts are respectively disposed on two sides of the electromagnet installation part, and each magnet group installation part is positioned opposite to one of the magnet poles 112 of the electromagnet 100 disposed in the electromagnet installation part. A number of the connecting wall 201 is two, the two connecting walls 201 are respectively disposed on the other sides of the electromagnet installation part, and first extension parts 213 are respectively disposed on the connecting walls 201. Second extension parts 214 are respectively disposed on two sides of the magnet group installation part. The first extension part 213 and the second extension part 214 which are located on a same side extend in a same direction, and the first extension part 213 and the second extension part 214 which are located on the same side are connected through the elastic connection part. Specifically, the magnet group installation part includes a side wall 230 and a pair of retaining pieces 202 extending towards the electromagnet installation part from a side of the side wall 230. The two retaining pieces 202 are spaced apart to provide an installation space for the magnet group 300. The second extension parts 214 are disposed at two ends of the side wall 230, formed by extending outward from the two ends of the side wall 230. The two retaining pieces 202 prevent the magnet group 300 from detaching from the magnet group installation part during the reciprocating motion. The electromagnet installation part includes a supporting bottom surface and two supporting walls 210 arranged symmetrically and disposed apart on the supporting bottom surface. An end face of each supporting wall 210 defines two grooves 211 that are spaced apart from each other, and the grooves 211 on the two supporting walls 210 corresponds to each other. When the two electromagnets 100 are disposed in the electromagnet installation part, ends of the metal core 110 are supported in the corresponding grooves 211. The electromagnets 100 are pressed and secured in the electromagnet installation part by using an electromagnet fixing plate 212. Since the electromagnet installation part is fixed and immovable while the magnet group installation part moves back and forth with the magnet group 300, the elastic connection part serves to buffer and provide elastic return. The electromagnet installation part, the magnet group installation part, the elastic connection part, the connecting wall 201, and the extension parts can be assembled to form the installation frame 200 or can be directly integrated into one whole. In the first implementation, an integral molding method is used. The installation frame 200 is made of plastic, which is beneficial for the deformation and recovery of the elastic connection part. In the first implementation, as shown in FIG. 10, the elastic connection part includes at least one first elastic support part 220. In the first implementation, the elastic connection part includes two first elastic support parts 220 and a second elastic support part 240, and the second elastic support part 240 is disposed between the two first elastic support parts 220. A thickness of the second elastic support part 240 is greater than that of each of the two first elastic support parts 220, which allows the second elastic support part 240 store more elastic potential energy to help the magnet group 300 return to its original position. At the same time, the thicker second elastic support part 240 is disposed between the two thinner first elastic support parts 220 to ensure more uniform deformation of the first elastic support parts 220 disposed on two sides of the second elastic part 240 during movement, and to prevent any one of the two first elastic support parts 220 from breaking due to excessive deformation compared to the other first elastic support part 220. Furthermore, an end of the first elastic support part 220 is connected to the first extension part 213, and the other end of the first elastic support part 220 is connected to the second extension part 214. An end of the second elastic support part 240 is connected to the first extension part 213, and the other end of the second elastic support part 240 is connected to the second extension part 214. Portions of the second extension part 214 disposed between the first elastic support part 220 and the second elastic support part 240, as well as between the first elastic support part 220 and an adjacent retaining piece 202 (which can be understood as being between the first elastic support part 220 and the magnet group installation part), are circular arc-shaped, that is, circular arc shape 222. Portions of the first extension part 213 disposed between the first elastic support part 220 and the second elastic support part 240, as well as between the first elastic support part 220 and the adjacent connecting wall 201, are also circular arc shape 222. A radius of the circular arc shape 222 is 0.5 mm or greater (including 0.5 mm). By setting the circular arc shape 222 and limiting its radius, stress at an edge position of a connection can be dispersed, preventing cracks due to the stress exceeding material strength. In the first implementation, as shown in FIGS. 1, 2, and 11, an actuating arm 400 is connected to the magnet group installation part. An output shaft 421 is disposed on the actuating arm 400, positioned above the installation frame 200. The actuating arm 400 includes a fixing part 410 and an output shaft connecting part 420. The fixing part 410 is connected to the side wall 230 of the magnet group installation part, and the output shaft connecting part 420 is bent relative to the fixing part 410 and disposed above the installation frame 200. The output shaft 421 is disposed on the output shaft connecting part 420. A number of the output shaft 421 is determined based on a number of a component that require reciprocating linear motion. In the first implementation, the actuating arm 400 is provided with two output shafts 421, and the two output shafts 421 on a same side is arranged spaced apart in the direction perpendicular to the reciprocating motion of the magnet group 300. That is, the magnet group 300 drives two output shafts 421 in reciprocating linear motion, and the two magnet groups 300 drive four output shafts 421 in reciprocating linear motion. For example, if the component requiring reciprocating linear motion is a cutting blade assembly in a hair cutting device, and a number of the cutting blade assembly can be set to four, which improves cutting efficiency and results in cleaner trimming. In the first implementation, as shown in FIGS. 1 and 2, the actuating arm 400 defines a locating hole, and a locating protrusion is disposed on the magnet group installation part. When the actuating arm 400 is connected to the magnet group installation part, the locating protrusion is inserted into the locating hole to position the actuating arm 400 and facilitate the positioning and installation of the actuating arm 400. In the first implementation, a number of the actuating arms 400 is two, and free ends of the two actuating arms 400 in the first implementation are arranged oppositely.

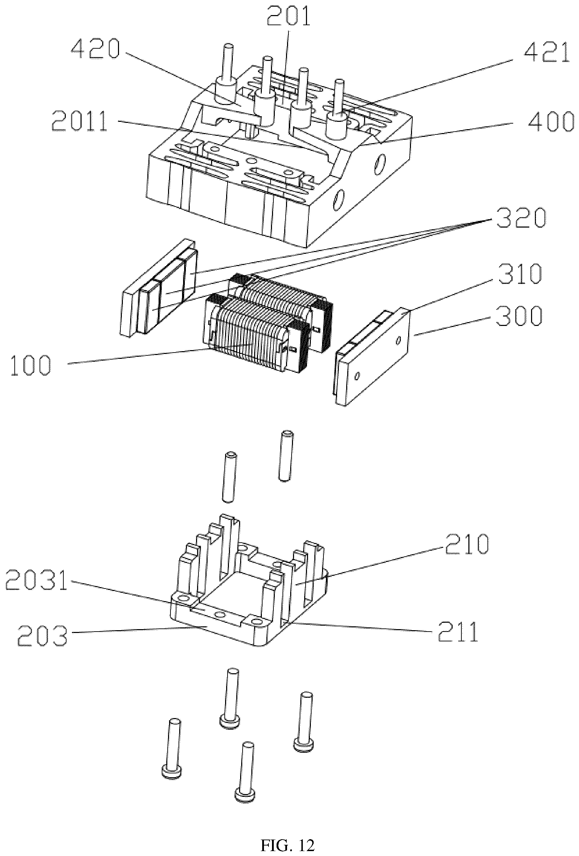

The invention also provides a second implementation of the installation frame 200, as shown in FIG. 12, the installation frame 200 in the second implementation is structurally similar to that in the first implementation previously described, and the difference is that: in the second implementation, the electromagnet installation part is formed independently and then assembled with the connecting wall 201 and the elastic connection part into a single unit. Specifically, the electromagnet installation part includes the two symmetrically arranged and spaced support walls 210, and two sides of the two support walls 210 are connected by side walls 203 respectively. A top surface 2031 of each side wall 203 is either concave-shaped or convex-shaped, and a bottom surface 2011 of the connecting wall 201 is adapted to a shape of the top surface 2031 of the corresponding side wall 203. For example, when the top surface 2031 of the side wall 203 is concave-shaped, the bottom surface 2011 of the connecting wall 201 is convex-shaped, and vice versa. When assembling the electromagnet installation part with the connecting wall 201, the support walls 210 of the electromagnet installation part are inserted between the two connecting walls 201, and the top surface 2031 of the side wall 203 is butted against the bottom surface 2011 of the corresponding connecting wall 201, and the side wall 203 is secured to the corresponding connecting wall 201 through fasteners, therefore, the electromagnet installation part is connected to the connecting wall 201 and indirectly connected to the elastic connection part. Additionally, unlike the first implementation previously described, the actuating arm 400 is integrated into one whole with the magnet group installation part in the second implementation, which simplifies the production process and avoids assembly errors. Specifically, the actuating arm 400 includes the output shaft connecting part 420, which is directly integrated into one whole with the magnet group installation part.

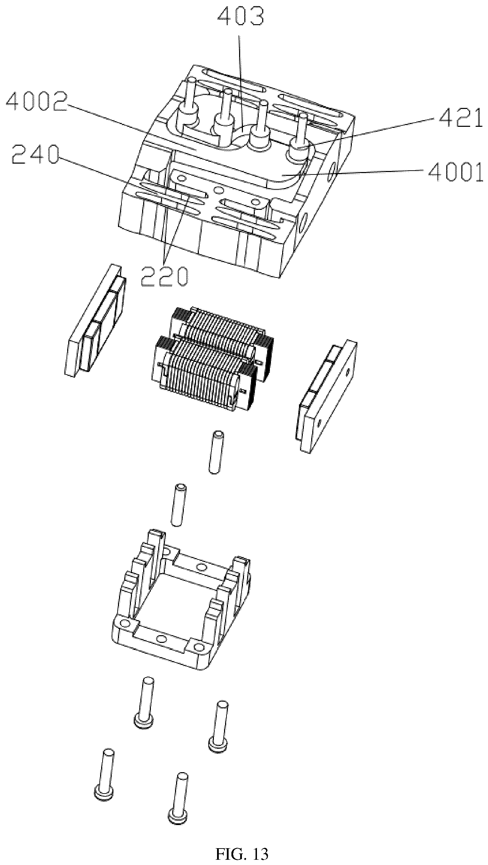

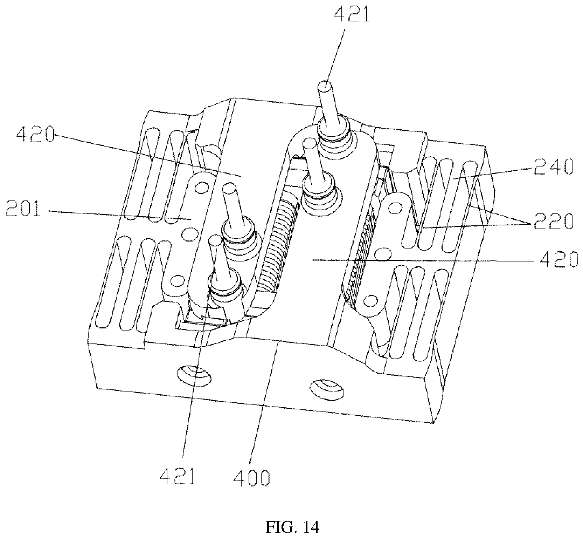

The invention also provides a third implementation of the installation frame 200, as shown in FIG. 13, the installation frame 200 in the third implementation is structurally similar to that in the second implementation previously described, and the difference is that: in the third implementation, the free ends of the two actuating arms 400 are arranged in a staggered manner. By arranging the two actuating arms 400 in the staggered manner, better dynamic balance can be achieved, which further reduces vibration. Specifically, there are two specific implementations for the staggered arrangement of the free ends of the two actuating arms 400. In the first one, as shown in FIG. 14, the free ends of the two actuating arms 400 are arranged in a staggered manner. In the second one, as shown in FIG. 13, the output shaft connecting part 420 of the actuating arm 400 includes a head 4001 and a neck 4002 connected with the head 4001. The actuating arm 400 is integrally formed and connected to the magnet group installation part through the neck 4002. A size of the header 4001 is greater than a size of the neck 4002, and a connection between the head 4001 and the neck 4002 forms an inwardly concave arc 403. The inwardly concave arc 403 forms a receiving groove with the neck 4002, and a portion of the head 4001 of the actuating arm 400 extends into the receiving groove of the other actuating arm 400. At the same time, the output shafts 421 on the two actuating arms 400 are disposed on heads 4001, and the output shafts 421 on the heads 4001 of the two actuating arms 400 are arranged side by side, thus making the free ends of the two actuating arms 400 in the staggered arrangement.

In the second and third implementations mentioned above, the fixing plate 212 is not required.

In the embodiment, a hair cutting device is also provided, which includes a shell and at least one cutting blade assembly. In the embodiment, a number of the cutting blade assembly is four. The linear actuating device as described above is disposed in the shell. The cutting blade assembly moves back and forth under a power provided by the magnet group 300 of the linear actuating device. Specifically, the cutting blade assembly is connected to the output shaft 421 and is connected to the magnet group installation part through the actuating arm 400, which allows the cutting blade assembly perform reciprocating linear motion for hair cutting along with the magnet group 300. Due to the linear actuating device, a length (or height) of the shell of the hair cutting device can be shortened, the horizontal space inside the shell can be fully utilized, and the beauty of the hair cutting device can be improved. Furthermore, because the hair cutting device is equipped with the linear actuating device, it also benefits from all the technical advantages provided by the linear actuating device, which will not be reiterated here.

In the invention, unless otherwise specifically defined and limited, a first feature being "on" or "under" a second feature can mean that the first and second features are in direct contact, or that the first and second features are in indirect contact through an intermediate medium. Moreover, the first feature being "above", "over", or "on" the second feature can mean that the first feature is directly above or diagonally above the second feature, or simply that the first feature is at a higher horizontal level than the second feature. The first feature being "below", "underneath", or "under" the second feature can mean that the first feature is directly below or diagonally below the second feature, or simply that the first feature is at a lower horizontal level than the second feature.

In the description of this specification, reference terms such as "preferred embodiment", "another embodiment", "other embodiments" or "specific examples" refer to the specific features, structures, materials, or characteristics described in conjunction with the embodiment or example being included in at least one embodiment or example of the invention. In the specification, the illustrative expressions of the aforementioned terms do not necessarily refer to the same embodiment or example. Moreover, the described specific features, structures, materials, or characteristics can be combined in any appropriate manner in any one or more embodiments or examples. Furthermore, without contradiction, those skilled in the art can combine and integrate different embodiments or examples and the features of different embodiments or examples as described in the specification.

Although the embodiments of the invention have been shown and described above, it can be understood that the above embodiments are exemplary and should not be construed as limitations on the invention. Those skilled in the art can make changes, modifications, substitutions, and variations to the above embodiments within the scope of the invention.

## Claims

1. A linear actuating device comprising:
an installation frame, wherein the installation frame comprises:
an electromagnet installation part; and
a magnet group installation part, disposed on a side of the electromagnet installation part;
an electromagnet, horizontally disposed in the electromagnet installation part; and
a magnet group, disposed in the magnet group installation part, wherein after the magnet group is disposed in the magnet group installation part, the magnet group is positioned opposite to a magnet pole of an end of the electromagnet disposed in the electromagnet installation part.

2. The linear actuating device as claimed in claim 1, wherein a number of the magnet group installation part is two, the two magnet group installation parts are respectively disposed on two sides of the electromagnet installation part, a number of the magnet group is two, the two magnet groups are respectively disposed in the two magnet group installation parts, and each magnet group is positioned opposite to a magnet pole of a corresponding end of the electromagnet disposed in the electromagnet installation part.

3. The linear actuating device as claimed in claim 1 or claim 2, wherein the magnet group installation part is elastically connected to the electromagnet installation part through an elastic connection part; and the elastic connection part is integrated with the electromagnet installation part into one whole, or the elastic connection part is detachably connected to the electromagnet installation part by fasteners.

4. The linear actuating device as claimed in claim 3, wherein connecting walls are respectively disposed on two sides of the electromagnet installation part, first extension parts are respectively disposed on the connecting walls, second extension parts are respectively disposed on two sides of the magnet group installation part, one of the first extension parts and one of the second extension parts on a same side as the one of the first extension parts extend in a same direction, and the one of the first extension parts and the one of the second extension parts on the same side as the one of the first extension parts are connected through the elastic connection part.

5. The linear actuating device as claimed in claim 3, wherein the elastic connection part comprises at least one first elastic support part.

6. The linear actuating device as claimed in claim 5, wherein the elastic connection part further comprises a second elastic support part, a number of the first elastic support part is two, the second elastic support part is disposed between the two first elastic support parts, and a thickness of the second elastic support part is greater than a thickness of each of the two first elastic support parts on two sides of the second elastic support part.

7. The linear actuating device as claimed in claim 4, wherein the elastic connecting part comprises two first elastic support parts and a second elastic support part, and the second elastic support part is disposed between the two first elastic support parts;
a portion of the first extension part disposed between each of the two first elastic support parts and the second elastic support part, and a portion of the first extension part disposed between the first elastic support part and the respective connecting wall are circular arc-shaped; and
a portion of the second extension part disposed between each of the two first elastic support parts and the second elastic support part, and a portion of the second extension part disposed between the first elastic support part and the magnet group installation part are circular arc-shaped.

8. The linear actuating device as claimed in claim 1, wherein an actuating arm is connected to the magnet group installation part, an output shaft is disposed on the actuating arm, and the output shaft is disposed above the installation frame.

9. The linear actuating device as claimed in claim 8, wherein the actuating arm defines a locating hole, a locating protrusion is disposed on the magnet group installation part, when the actuating arm is connected to the magnet group installation part, the locating protrusion is inserted into the locating hole to position the actuating arm; or
the actuating arm is integrated with the magnet group installation part into one whole.

10. The linear actuating device as claimed in claim 8 or claim 9, wherein a number of the actuating arm is two, a number of the magnet group installation part is two, the two magnet group installation part are respectively disposed on two sides of the electromagnet installation part, the two actuating arms are respectively disposed on the magnet group installation parts on the two sides of the electromagnet installation part, and free ends of the two actuating arms are arranged in a staggered or opposite manner.

11. A hair cutting device comprising a shell and at least one cutting blade assembly, wherein the linear actuating device as claimed in any one of claims 1-10 is disposed in the shell, the cutting blade assembly is connected to the magnet group installation part, and the cutting blade assembly is configured to move back and forth with the magnet group under a power provided by the magnet group of the linear actuating device.
